# FASCICULE DE BREVET EUROPEEN

(11) **EP 2 935 137 B1**
(45) Date de publication et mention de la délivrance du brevet: **01.03.2017**
(21) Numéro de dépôt: 13818337.1
(22) Date de dépôt: 18.12.2013
(51) Int. Cl.: C03C 10/00, C03C 17/36

(54) **VITROCERAMIQUE**
GLASKERAMIK
GLASS-CERAMIC

(30) Priorité: 19.12.2012 FR 1262286
(43) Date de publication de la demande: 28.10.2015
(73) Titulaire: Eurokera S.N.C., 02407 Château Thierry (FR)
(72) Inventeur: DE GRAZIA, Marco, F-92800 Puteaux (FR); MALLET, Claire, H2V 1V7 (CA)
(74) Mandataire: Saint-Gobain Recherche
(86) Numéro de dépôt international: PCT/FR2013/053153
(87) Numéro de publication internationale: WO 2014/096695

(56) Documents cités:
- EP-A1- 0 745 569
- EP-A1- 2 226 567
- EP-A1- 2 489 507
- WO-A1-2012/020189
- WO-A2-2005/105687
- FR-A1- 2 799 005
- FR-A1- 2 927 897
- FR-A1- 2 931 147
- US-A1- 2005 079 369

## Description

L'invention se rapporte au domaine des vitrocéramiques utilisées comme panneaux pour portes ou vitres de four, de poêles ou de cheminées.

Les applications précitées requièrent des panneaux présentant une résistance thermomécanique élevée, pour laquelle les vitrocéramiques sont particulièrement appréciées, et notamment les vitrocéramiques du type aluminosilicate de lithium (LAS), contenant des cristaux de structure majoritairement β-quartz noyés dans une phase vitreuse résiduelle. Les coefficients de dilatation thermique de ces vitrocéramiques sont en effet presque nuls, d'où leur excellente résistance aux chocs et aux gradients thermiques.

Il est en outre avantageux, pour des raisons de sécurité, de pouvoir réduire au maximum la température de la face du panneau opposée à la source chaude, afin d'éviter un trop grand échauffement du panneau lui-même, mais aussi des environs, et ainsi éviter les brûlures pour les utilisateurs du four, du poêle ou de la cheminée.

L'invention a pour but de proposer des panneaux pour portes de four ou inserts de cheminées, présentant à la fois une résistance thermomécanique élevée, des propriétés de limitation de la température sur la face opposée à la face tournée vers la source de chaleur, ainsi que des propriétés optiques acceptables, notamment en termes de réflexion et transmission lumineuse. Dans les applications susvisées, le panneau doit également résister à des atmosphères corrosives, si bien qu'une excellente résistance chimique est requise.

A cet effet, l'invention a pour objet une feuille de vitrocéramique munie sur au moins une partie d'au moins une de ses faces d'un revêtement de couches minces comprenant au moins une couche mince fonctionnelle constituée d'un métal à base de niobium métallique Nb, ou d'un oxyde à base d'un oxyde de niobium NbOₓ dans lequel x est d'au plus 0,5, la ou chaque couche mince fonctionnelle étant encadrée par au moins deux couches minces en matériaux diélectriques, l'épaisseur physique de la couche mince fonctionnelle ou le cas échéant l'épaisseur physique cumulée de toutes les couches minces fonctionnelles étant comprise dans un domaine allant de 8 à 15 nm.

L'invention a également pour objet une porte ou vitre de four, de poêle ou de cheminée comprenant au moins une feuille de vitrocéramique selon l'invention. L'invention a enfin pour objet un four, un poêle ou une cheminée comprenant au moins une porte ou vitre selon l'invention.

La ou chaque couche mince fonctionnelle est soit constituée d'un métal à base de niobium métallique Nb soit constituée d'un oxyde à base d'un oxyde de niobium NbOₓ dans lequel x est d'au plus 0,5. On entend par l'expression « à base de » que le métal ou l'oxyde constituant la ou chaque couche mince fonctionnelle comprend de préférence au moins 80%, notamment 90% en poids, selon le cas de niobium métallique ou de NbOₓ. La couche mince fonctionnelle peut éventuellement comprendre d'autre métaux que Nb, de manière minoritaire, notamment au moins un métal choisi parmi Zr, Ti, Ta et Mo.

De préférence, toutefois, la ou chaque couche mince fonctionnelle est constituée de niobium métallique Nb ou est constituée d'un oxyde de niobium NbOₓ dans lequel x est d'au plus 0,5.

La ou chaque couche mince fonctionnelle peut être constituée de niobium métallique. Ce type de couches fonctionnelles, en association avec les couches diélectriques, s'est révélé particulièrement efficace tant en termes de thermique qu'en termes de résistance thermomécanique et chimique.

La ou chaque couche mince fonctionnelle peut alternativement être constituée d'oxyde NbOₓ où x est d'au plus 0,5, notamment 0,4, de préférence compris dans un domaine allant de 0,05 à 0,35, notamment de 0,25 à 0,30. La valeur de x peut être déterminée à l'aide des profils en profondeur des empilements par la méthode XPS (spectrométrie photoélectronique X, ou spectrométrie de photoélectrons induits par rayons X ou encore X-Ray photoelectron spectrometry selon le terme anglais), par intégration des pics respectifs de Nb et O, selon des techniques bien connues propres à cette méthode d'analyse. La mesure est effectuée au maximum d'intensité du signal du niobium, correspondant au centre de la couche fonctionnelle. Typiquement, les conditions expérimentales de la mesure effectuée peuvent être les suivantes. Les profils en profondeur XPS sont acquis à l'aide d'un spectromètre NOVA® distribué par la société Kratos. Les spectres XPS sont collectés en utilisant l'excitation Kₐₗₚₕₐ de l'aluminium (hv=1486,6 eV) de 225 W. L'échelle des énergies de liaison est corrigée des effets de charges (charging effects) en imposant l'énergie de liaison des électrons C1s (CH - carbones aliphatiques) à 285 eV. La source d'abrasion est un canon à ions Ar⁺ fonctionnant à 2keV avec une intensité de 1,15 µA balayant une trame de 3 x 3 mm² (ces conditions opératoires menant à une vitesse d'abrasion correspondante à 3,4 nm/mm dans la silice). La zone d'analyse (collection des photoélectrons) est un rectangle de dimensions 300 × 700 µm². L'angle de take-off est de 90° par rapport à la surface de l'échantillon.

Une manière alternative de caractériser le taux d'oxygène dans la couche de NbOₓ utilise la technique appelée SIMS (Spectrométrie de Masse à Ionisation Secondaire). Cette méthode consiste à bombarder la surface de l'empilement à analyser avec un faisceau d'ions. L'échantillon est pulvérisé, et une partie de la matière pulvérisée est ionisée. Les ions dits secondaires sont accélérés vers un spectromètre de masse qui permettra de mesurer la composition élémentaire, isotopique ou moléculaire de la surface de l'échantillon. Plus précisément, les conditions expérimentales de la mesure effectuée peuvent être définies ci-après. Les profils en profondeur des empilements sont obtenus à l'aide d'un équipement TOF SIMS 5 de la société IONTF. Le profil des ions secondaires est obtenu en utilisant comme source d'ions primaires les ions Bi₃²⁺ à 60 keV avec un courant pulsé de 0,3 pA (avec un pulse de 7 ns et un temps de cycle de 100 microsecondes) et comme espèces abrasantes des ions Cs⁺ à 1 keV, avec un courant pulsé de 50 nA. La surface pulvérisée est un carré de 200 micromètres de côté. La région analysée est un carré de 50 micromètres de côté centrée sur le fond du cratère. Un canon à électron est utilisé pour neutraliser la surface de façon à réduire les effets de charge (charging effects). Le taux d'oxygène dans la couche de NbOₓ peut être caractérisé par le rapport des signaux NbO/Nb, la mesure correspondant au ratio des aires intégrées des signaux NbO et Nb sur la portion des profils SIMS pour lequel l'intensité du signal Nb est significative (non nulle). De préférence, la couche fonctionnelle constituée d'un oxyde à base d'oxyde de niobium NbOₓ est caractérisée par un rapport NbO/Nb compris dans un domaine allant de 1,0 à 3,5, notamment de 1,8 à 2,8 et même de 2,1 à 2,5. Cette manière de caractériser le taux d'oxygène est une alternative à celle utilisant la mesure de x par la technique XPS.

L'épaisseur physique de la couche mince fonctionnelle ou le cas échéant l'épaisseur physique cumulée de toutes les couches minces fonctionnelles est comprise dans un domaine allant de 8 à 15 nm, de préférence de 9 à 14 nm, et même de 10 à 13 nm. De trop faibles épaisseurs ne permettent en effet pas d'atteindre les performances thermiques voulues. A l'inverse, des épaisseurs trop élevées réduisent de manière inacceptable la transmission lumineuse de la feuille.

De préférence, le revêtement ne comprend qu'une couche mince fonctionnelle, notamment constituée de niobium métallique. Le revêtement ne comprend avantageusement que deux couches minces de matériau diélectrique, encadrant la couche mince fonctionnelle unique. Ce type d'empilements simple s'est révélé satisfaisant, et bien plus facile à produire industriellement qu'un empilement comprenant plusieurs couches fonctionnelles, et par conséquent au moins trois couches de matériau diélectrique.

Les matériaux diélectriques, identiques ou différents, sont de préférence choisis parmi les oxydes, les nitrures ou les oxynitrures de silicium, d'aluminium, de titane, de zirconium, d'étain, de zinc, ou l'un quelconque de leurs mélanges ou solutions solides.

Les matériaux diélectriques, identiques ou différents, sont de préférence à base ou essentiellement constitués (voir constitués) de nitrure de silicium, d'oxyde de titane, d'oxyde de titane et de zirconium, d'oxyde d'étain et de zinc, de nitrure de titane et de silicium, de nitrure de silicium et de zirconium, d'oxyde de silicium. Par l'expression « à base de », on entend que le matériau comprend de préférence au moins 80%, voire 90% en poids du composé en question.

Parmi eux, le nitrure de silicium est particulièrement apprécié pour sa capacité à protéger efficacement la couche fonctionnelle et à être déposé rapidement par pulvérisation cathodique magnétron. Le nitrure de silicium n'est pas nécessairement stoechiométrique en azote (même si par souci de simplification on peut l'appeler Si₃N₄ dans la suite du texte). Le nitrure de silicium peut être dopé, par exemple par de l'aluminium, afin de faciliter son dépôt par pulvérisation cathodique magnétron DC. Le dopage de la cible de silicium, généralement par 2 à 10% atomiques d'aluminium permet en effet d'améliorer les propriétés conductrices de la cible. L'oxyde de titane s'est également révélé un bon matériau diélectrique, notamment grâce à son indice de réfraction élevé.

L'épaisseur physique de chaque couche de matériau diélectrique est de préférence comprise dans un domaine allant de 10 à 100 nm, notamment de 20 à 80 nm. Elle est avantageusement ajustée de manière à optimiser les propriétés optiques de l'empilement, notamment sa transmission lumineuse et sa réflexion lumineuse.

De préférence, une couche mince de bloqueur est située au-dessus et en contact avec et/ou en-dessous et en contact avec la ou chaque couche mince fonctionnelle. Comme il est d'usage dans le domaine des couches minces, on entend par « au-dessus » une position plus éloignée du substrat. Les couches de bloqueur sont destinées à empêcher la dégradation de la couche fonctionnelle lors de son utilisation à haute température.

Lorsqu'au moins l'une des couches de matériaux diélectrique est à base d'un nitrure ou d'un oxynitrure, par exemple de nitrure de silicium, il a été observé que la couche fonctionnelle pouvait se nitrurer durant un traitement thermique, par exemple durant l'utilisation du panneau dans un four, un poêle ou une cheminée, et que cette nitruration avait pour effet de dégrader les performances thermiques du panneau. L'interposition d'une couche de bloqueur entre la couche fonctionnelle et chaque couche de matériau diélectrique, notamment de nitrure ou d'oxynitrure (comme le nitrure de silicium) s'est donc révélée avantageuse. Par conséquent, notamment lorsque les couches de matériau diélectrique sont toutes les deux en nitrure ou oxynitrure, et particulièrement en nitrure de silicium, il est préférable de disposer au moins deux couches de bloqueur, respectivement en-dessous et au-dessus de la couche fonctionnelle, en contact avec cette dernière.

De même, lorsqu'au moins une des couches de matériaux diélectriques est à base d'un oxyde ou d'un oxynitrure, la couche fonctionnelle peut s'oxyder de manière trop importante, et voir ses propriétés se dégrader. Dans ce cas également, il est préférable de disposer une couche de bloqueur entre la couche fonctionnelle et chaque couche de matériau diélectrique.

La ou chaque couche mince de bloqueur est de préférence en titane. D'autres métaux ou alliages, voire des oxydes ou des nitrures, sont possibles, notamment NiCr, Mo, B, Al, TiNi, TiN ou TiOₓ, mais le titane s'est révélé le plus efficace, notamment pour éviter la nitruration du niobium par des couches diélectriques en nitrure ou oxynitrure.

L'épaisseur physique de la ou chaque couche mince de bloqueur (notamment en titane) est de préférence d'au plus 3 nm, notamment 2 nm. Elle est généralement d'au moins 0,5 nm ou 1 nm. De très faibles épaisseurs sont en effet suffisantes pour obtenir l'effet de blocage des ions azote, tandis que des épaisseurs élevées vont contribuer à diminuer fortement la transmission lumineuse du panneau.

Les empilements suivants sont préférés .
i. V/D/Nb/D
ii. V/D/B/Nb/D
iii. V/D/Nb/B/D
iv. V/D/B/Nb/B/D.

V désigne la feuille de vitrocéramique, D le matériau diélectrique (par exemple en nitrure de silicium ou à base de ce matériau), Nb la couche mince fonctionnelle (notamment de Nb métallique ou de NbOₓ), B la couche de bloqueur (de préférence en titane). Les diélectriques D et les bloqueurs B peuvent être identiques ou différents, et seront préférentiellement identiques afin de simplifier la production industrielle de l'empilement. Les différents modes préférés décrits ci-avant, que ce soit en termes de choix de matériaux ou de choix d'épaisseurs, sont bien entendu applicables à ces empilements préférés, l'ensemble des combinaisons n'étant pas expressément indiqué ici pour des raisons de concision.

L'empilement i) ne contient aucun bloqueur B. Il est particulièrement adapté au cas où les matériaux des couches D ne sont pas des nitrures ou des oxynitrures.

Les empilements ii) et iii) ne contiennent qu'un seul bloqueur B, respectivement en-dessous et au-dessus de la couche fonctionnelle. Ces empilements sont particulièrement adaptés au cas où une seule des couches diélectriques D est en nitrure ou en oxynitrure, en l'occurrence celle que le bloqueur B sépare de la couche fonctionnelle.

L'empilement iv) contient deux bloqueurs, notamment en titane. Dans ce cas, les couches diélectriques D sont de préférence toutes deux en nitrure de silicium ou à base de ce matériau. Un empilement particulièrement préféré est donc l'empilement V/Si₃N₄/Ti/Nb/Ti/Si₃N₄, l'appellation « Si₃N₄ » ne préjugeant pas de la stoechiométrie réelle de la couche et d'un éventuel dopage, notamment par de l'aluminium, comme expliqué précédemment.

La feuille de vitrocéramique présente de préférence un facteur de réflexion lumineuse d'au plus 15%, notamment 13% et/ou un facteur de transmission lumineuse d'au moins 40, notamment 50%, au sens de la norme EN 410 :1998.

La réflexion pour une longueur d'onde de 3 micromètres est avantageusement d'au moins 50% afin de limiter les transferts de chaleur au travers du panneau.

La vitrocéramique possède de préférence une composition du type aluminosilicate de lithium (LAS), et contient des cristaux de structure β-quartz.

Plus précisément, la composition chimique de la vitrocéramique comprend de préférence les constituants suivants dans les limites définies ci-après exprimées en pourcentages pondéraux .
- SiO₂: 52-75%, notamment 65-70%
- Al₂O₃: 18-27%, notamment 18-19,8%
- Li₂O: 2,5-5,5%, notamment 2,5-3,8%
- K₂O: 0-3%, notamment 0-<1%
- Na₂O: 0-3%, notamment 0-<1%
- ZnO: 0-3,5%, notamment 1,2-2,8%
- MgO: 0-3%, notamment 0,55-1,5%
- CaO: 0-2,5%, notamment 0-0,5%
- BaO: 0-3,5%, notamment 0-1,4%
- SrO: 0-2%, notamment 0-1,4%
- TiO₂: 1,2-5,5%, notamment 1,8-3,2%
- ZrO₂: 0-3%, notamment 1,0-2,5%
- P₂O₅: 0-8%, notamment 0-0,5%.

La vitrocéramique est de préférence transparente et incolore, si bien qu'elle ne comprend normalement pas d'agents colorants, à l'exception d'impuretés d'oxyde de fer, naturellement contenu dans plusieurs matières premières. Elle ne contient donc, de préférence, pas d'oxyde de vanadium, de cobalt, de chrome, de nickel, de cuivre, ni de sélénium ou de sulfures. Selon certains modes de réalisation, et afin de jouer sur sa coloration, la vitrocéramique peut toutefois contenir au moins un agent colorant, notamment l'oxyde de cobalt.

La composition comprend généralement des oxydes ayant servi à affiner le verre durant sa production, par exemple SnO₂, As₂O₅, Sb₂O₅, ou encore des sulfures tels que ZnS.

Le coefficient de dilatation thermique linéaire (entre 30 et 200°C) de la feuille de vitrocéramique est de préférence d'au plus 15.10⁻⁷/°C, voire 5.10⁻⁷/°C.

La vitrocéramique peut être produite par des procédés connus, par fusion de verre (appelé verre-mère ou verre précurseur), mise en forme d'une feuille de verre-mère par flottage ou laminage, puis céramisation de cette feuille de verre-mère afin de faire croître en son sein les cristaux voulus, notamment de structure β-quartz, et obtenir ainsi la vitrocéramique. La céramisation met généralement en oeuvre un traitement thermique en plusieurs étapes, selon un cycle destiné à créer des germes au sein du verre (nucléation autour de 670 à 800°C) puis à faire croître les cristaux autour de ces germes (autour de 900 à 1000°C) .

L'épaisseur de la feuille de vitrocéramique sera généralement comprise dans un domaine allant de 2 à 8 mm, notamment de 3 à 6 mm.

Le revêtement peut ensuite être déposé par différentes techniques, par exemple le dépôt chimique en phase vapeur (CVD), éventuellement assisté par plasma (PECVD), et notamment sous pression atmosphérique (APPECVD), le dépôt chimique en phase vapeur par combustion (CCVD) ou encore les procédés sol-gel.

La technique de dépôt préférée est la pulvérisation cathodique magnétron, notamment par polarisation de la cible en courant continu (DC). Cette technique sous vide permet de déposer des empilements complexes avec des vitesses de dépôt élevées. Dans ce procédé, le substrat vient défiler dans des chambres sous vide, au regard de cibles métalliques ou céramiques pulvérisées par un plasma, les atomes arrachés de la cible se déposant sur le substrat. Le dépôt peut être réactif (par exemple en déposant du nitrure de silicium à partir d'une cible en silicium - généralement dopée par de l'aluminium comme explicité *supra-* dans une atmosphère contenant de l'azote). Lorsque la couche fonctionnelle est constituée de niobium métallique, on utilise typiquement une cible de niobium et un plasma d'argon. Lorsque la couche fonctionnelle est constituée de NbOₓ, on utilisera de préférence une cible en niobium et un plasma d'argon contenant une petite quantité d'oxygène, par exemple entre 1 et 6%, notamment entre 2 et 5% en volume. Le dépôt du revêtement se fait sur la vitrocéramique, et non sur le verre-mère, car les températures très élevées subies lors du traitement de céramisation ainsi que les contraintes mécaniques subies du fait de la compaction du verre-mère sont susceptibles de dégrader l'empilement de couches minces.

La vitrocéramique ainsi revêtue peut ensuite être découpée, façonnée, éventuellement émaillée, pour être montée dans une porte ou vitre de four, de poêle ou de cheminée.

La porte de four (généralement un four domestique, typiquement un four à pyrolyse) comprend de préférence 2 à 4 panneaux transparents, la feuille de vitrocéramique selon l'invention étant de préférence la feuille la plus proche de l'enceinte intérieure du four.

Dans une telle configuration, mais aussi dans le cas d'un poêle ou d'une cheminée, la couche fonctionnelle peut être tournée vers l'intérieur de l'enceinte (en réfléchissant la chaleur vers l'enceinte) ou vers l'extérieur de l'enceinte (afin de réduire l'émission de chaleur par la surface extérieure). La réduction des pertes énergétiques entraîne une augmentation du rendement des fours, poêles et cheminées, tout en réduisant la température de la porte ou de la vitre et celle de son environnement proche. Le positionnement de la couche fonctionnelle vers l'extérieur de l'enceinte facilite en outre la pyrolyse des suies et des salissures déposées à l'intérieur de l'enceinte.

Les exemples qui suivent illustrent l'invention sans la limiter.

Selon un premier exemple (exemple 1), on a déposé sur une vitrocéramique claire commercialisée sous la marque Keralite par la demanderesse un empilement constitué des couches suivantes : une couche diélectrique de nitrure de silicium (60 nm), puis un bloqueur de titane (1 nm), puis une couche fonctionnelle de niobium (10 nm), puis un bloqueur de titane (1 nm) et enfin une couche diélectrique de nitrure de silicium (60 nm). Les épaisseurs sont des épaisseurs physiques. La vitrocéramique utilisée est une vitrocéramique du type LAS contenant des cristaux de structure β-quartz et une phase vitreuse minoritaire.

Toutes les couches ont été déposées de manière connue par pulvérisation cathodique magnétron DC, les couches de titane et de niobium étant déposées à partir de cibles respectivement de titane et de niobium sous un plasma d'argon et les couches de nitrure de de silicium à partir de cibles de silicium (dopé par 8% atomiques d'aluminium), sous une atmosphère d'argon et d'azote.

Le facteur de transmission lumineuse obtenu est de 51,0%, le facteur de réflexion lumineuse de seulement 3,4%. La réflexion pour une longueur d'onde de 3 micromètres est supérieure à 50%.

L'exemple 2 se différencie du premier en ce que l'épaisseur physique de la couche de niobium est de 13 nm. Dans ce cas, le facteur de transmission lumineuse est de 44,0%, le facteur de réflexion lumineuse de 4,2%. La réflexion pour une longueur d'onde de 3 micromètres est également bien supérieure à 50%.

Dans le cas des exemples 1 et 2, la réflexion à 3 micromètres est inchangée après un traitement thermique 60 h à 550°C, et aucun défaut visible à l'oeil nu n'est observé.

L'exemple 3 se différencie de l'exemple 1 en ce que les bloqueurs en titane sont remplacés par des bloqueurs en alliage de nickel et de de chrome, également déposées par pulvérisation cathodique magnétron.

L'exemple 4 se différencie du précédent en ce que le bloqueur situé au-dessus de la couche de niobium est supprimé.

L'exemple 5 se différencie de l'exemple 1 en ce que le bloqueur situé au-dessus de la couche de niobium est supprimé.

Dans le cas des exemples 3 à 5, la réflexion à 3 micromètres est supérieure à 50% après dépôt du revêtement, mais chute à environ 30% après un traitement thermique à 550°C. Ces exemples sont donc moins préférés, et illustrent à la fois l'intérêt de disposer un bloqueur de chaque côté de la couche de niobium et la supériorité du titane.

Les exemples 6 à 11 reproduisent l'exemple 1, à ceci près que les matériaux diélectriques et leurs épaisseurs sont différents. L'épaisseur de la couche de niobium est en outre de 13 nm. Enfin, ces empilements ne comprennent pas de bloqueurs. Les matériaux testés sont le nitrure de silicium et de zirconium, l'oxyde de silicium, l'oxyde de titane, l'oxyde de titane et de zirconium, l'oxyde d'étain et de zinc, le nitrure de silicium.

Le tableau 1 ci-après synthétise les différents essais réalisés, et indique la nature et l'épaisseur physique de la couche diélectrique située sous la couche fonctionnelle (appelée « diélectrique 1 »), la nature et l'épaisseur physique de la couche diélectrique située sur la couche fonctionnelle (appelée « diélectrique 2 »), le facteur de transmission lumineuse (appelé TL), de réflexion lumineuse (appelé RL), et la réflexion pour une longueur d'onde de 3 µm. Comme dans l'ensemble du texte, l'appellation des couches ne préjuge pas de leur stoechiométrie exacte et/ou de la présence d'éléments minoritaires, tels que des dopants.

**Tableau 1**

| | Diélectrique 1 | Diélectrique 2 | TL (%) | RL (%) | R3µm(%) |
|---|---|---|---|---|---|
| 6 | SiZrNₓ (60 nm) | SiZrNₓ (60 nm) | 50 | 4 | >50 |
| 7 | SiO₂ (85 nm) | SiO₂ (85 nm) | 35 | 7 | >50 |
| 8 | TiO₂ (50 nm) | TiO₂ (50 nm) | 45 | 7 | >50 |
| 9 | TiZrOₓ (50 nm) | TiZrOₓ (50 nm) | 48 | 10 | >50 |
| 10 | SnZnOₓ (60 nm) | SnZnOₓ (60 nm) | 48 | 4 | >50 |
| 11 | Si₃N₄ (60 nm) | SnZnOₓ (60 nm) | 48 | 4 | >50 |

## Revendications

1. Feuille de vitrocéramique munie sur au moins une partie d'au moins une de ses faces d'un revêtement de couches minces comprenant au moins une couche mince fonctionnelle constituée d'un métal à base de niobium métallique Nb ou d'un oxyde à base d'un oxyde de niobium NbOₓ dans lequel x est d'au plus 0,5, la ou chaque couche mince fonctionnelle étant encadrée par au moins deux couches minces en matériaux diélectriques, l'épaisseur physique de la couche mince fonctionnelle ou le cas échéant l'épaisseur physique cumulée de toutes les couches minces fonctionnelles étant comprise dans un domaine allant de 8 à 15 nm.

2. Feuille de vitrocéramique selon la revendication 1, telle que la ou chaque couche mince fonctionnelle est constituée de niobium métallique.

3. Feuille de vitrocéramique selon l'une des revendications précédentes, telle que le revêtement ne comprend qu'une couche mince fonctionnelle.

4. Feuille de vitrocéramique selon l'une des revendications précédentes, telle que les matériaux diélectriques, identiques ou différents, sont choisis parmi les oxydes, les nitrures ou les oxynitrures de silicium, d'aluminium, de titane, de zirconium, d'étain, de zinc, ou l'un quelconque de leurs mélanges ou solutions solides.

5. Feuille de vitrocéramique selon la revendication précédente, telle que les matériaux diélectriques, identiques ou différents, sont à base de nitrure de silicium, d'oxyde de titane, d'oxyde de titane et de zirconium, d'oxyde d'étain et de zinc, de nitrure de titane et de silicium, de nitrure de silicium et de zirconium, d'oxyde de silicium.

6. Feuille de vitrocéramique selon l'une des revendications précédentes, telle que l'épaisseur physique de chaque couche de matériau diélectrique est comprise dans un domaine allant de 10 à 100 nm, notamment de 20 à 80 nm.

7. Feuille de vitrocéramique selon l'une des revendications précédentes, telle qu'une couche mince de bloqueur est située au-dessus et en contact avec et/ou en-dessous et en contact avec la ou chaque couche mince fonctionnelle.

8. Feuille de vitrocéramique selon la revendication précédente, telle que la ou chaque couche mince de bloqueur est en titane.

9. Feuille de vitrocéramique selon l'une des revendications 7 ou 8, telle que l'épaisseur physique de la ou chaque couche mince de bloqueur est d'au plus 3 nm, notamment 2 nm.

10. Feuille de vitrocéramique selon l'une des revendications précédentes, présentant un facteur de réflexion lumineuse d'au plus 15%, notamment 13% et un facteur de transmission lumineuse d'au moins 40%, notamment 50%, au sens de la norme EN 410 :1998.

11. Feuille de vitrocéramique selon l'une des revendications précédentes, présentant une réflexion d'au moins 50% pour une longueur d'onde de 3 micromètres.

12. Feuille de vitrocéramique selon l'une des revendications précédentes, telle que la vitrocéramique possède une composition du type aluminosilicate de lithium, et contient des cristaux de structure β-quartz.

13. Feuille de vitrocéramique selon la revendication précédente, dont la composition chimique comprend les constituants suivants dans les limites définies ci-après exprimées en pourcentages pondéraux :
SiO₂ 52-75%, notamment 65-70%
Al₂O₃ 18-27%, notamment 18-19,8%
Li₂O 2,5-5,5%, notamment 2,5-3,8%
K₂O 0-3%, notamment 0-<1%
Na₂O 0-3%, notamment 0-<1%
ZnO 0-3,5%, notamment 1,2-2,8%
MgO 0-3%, notamment 0,55-1,5%
CaO 0-2,5%, notamment 0-0,5%
BaO 0-3,5%, notamment 0-1,4%
SrO 0-2%, notamment 0-1,4%
TiO₂ 1,2-5,5%, notamment 1,8-3,2%
ZrO₂ 0-3%, notamment 1,0-2,5%
P₂O₅ 0-8%, notamment 0-0,5%.

14. Porte ou vitre de four, de poêle ou de cheminée, comprenant au moins une feuille de vitrocéramique selon l'une des revendications précédentes.

15. Four, poêle ou cheminée comprenant au moins une porte ou vitre selon la revendication précédente.

## Patentansprüche

1. Glaskeramikscheibe, die auf mindestens einem Teil mindestens einer ihrer Flächen mit einer Beschichtung aus Dünnschichten versehen ist, die mindestens eine Funktionsdünnschicht enthält, die aus einem Metall auf Basis von metallischem Niobium Nb oder aus einem Oxid auf Basis eines Niobiumoxids NbOx besteht, wobei x höchstens 0,5 ist, wobei die oder jede Funktionsdünnschicht von mindestens zwei Dünnschichten aus dielektrischen Materialien eingerahmt ist, wobei die physikalische Dicke der Funktionsdünnschicht oder gegebenenfalls die kumulierte physikalische Dicke aller Funktionsdünnschichten in einem Bereich liegt, der von 8 bis 15 nm beträgt.

2. Glaskeramikscheibe nach Anspruch 1, **dadurch gekennzeichnet, dass** die oder jede Funktionsdünnschicht aus metallischem Niobium besteht.

3. Glaskeramikscheibe nach einem der vorhergehenden Ansprüche, **dadurch gekennzeichnet, dass** die Beschichtung nur eine Funktionsdünnschicht enthält.

4. Glaskeramikscheibe nach einem der vorhergehenden Ansprüche, **dadurch gekennzeichnet, dass** die identischen oder unterschiedlichen dielektrischen Materialien aus den Oxiden, den Nitriden oder den Oxinitriden aus Aluminium, aus Titan, aus Zirkonium, aus Zinn, aus Zink oder aus einem ihrer Gemische oder Feststofflösungen ausgewählt sind.

5. Glaskeramikscheibe nach dem vorhergehenden Anspruch, **dadurch gekennzeichnet, dass** die identischen oder unterschiedlichen dielektrischen Materialien auf Basis von Siliziumnitrid, von Titanoxid, von Titan- und Zirkoniumoxid, von Zinn- und Zinkoxid, von Titan- und Siliziumnidrid, von Silizium- und Zirkoniumnitrid, von Siliziumoxid sind.

6. Glaskeramikscheibe nach einem der vorhergehenden Ansprüche, **dadurch gekennzeichnet, dass** die physikalische Dicke jeder Schicht aus dielektrischem Material in einem Bereich liegt, der von 10 bis 100 nm, insbesondere von 20 bis 80 nm, beträgt.

7. Glaskeramikscheibe nach einem der vorhergehenden Ansprüche, **dadurch gekennzeichnet, dass** eine Sperrdünnschicht sich oberhalb und in Kontakt mit und/oder unterhalb und in Kontakt mit der oder jeder Funktionsdünnschicht befindet.

8. Glaskeramikscheibe nach dem vorhergehenden Anspruch, **dadurch gekennzeichnet, dass** die oder jede Sperrdünnschicht aus Titan ist.

9. Glaskeramikscheibe nach einem der Ansprüche 7 oder 8, **dadurch gekennzeichnet, dass** die physikalische Dicke der oder jeder Sperrdünnschicht höchstens 3 nm, insbesondere 2 nm, beträgt.

10. Glaskeramikscheibe nach einem der vorhergehenden Ansprüche, die einen Lichtreflexionsfaktor von höchstens 15 %, insbesondere 13 %, und einen Lichttransmissionsgrad von mindestens 40 %, insbesondere 50 %, im Sinne der Norm EN 410:1998 aufweist.

11. Glaskeramikscheibe nach einem der vorhergehenden Ansprüche, die eine Reflexion von mindestens 50 % bei einer Wellenlänge von 3 Mikrometer aufweist.

12. Glaskeramikscheibe nach einem der vorhergehenden Ansprüche, **dadurch gekennzeichnet, dass** die Glaskeramik eine Zusammensetzung des Typs Lithiumaluminiumsilikat besitzt und Kristalle mit β-Quarz-Struktur enthält.

13. Glaskeramikscheibe nach dem vorhergehenden Anspruch, deren chemische Zusammensetzung die folgenden Bestandteile innerhalb der nachstehend in Gewichtsprozent ausgedrückten Grenzwerte enthält:
SiO₂ 52-75 %, insbesondere 65-70 %
Al₂O₃ 18-27 %, insbesondere 18-19,8 %
Li₂O 2,5-5,5 %, insbesondere 2,5-3,8 %
K₂O 0-3 %, insbesondere 0-<1 %
Na₂O 0-3 %, insbesondere 0-<1 %
ZnO 0-3,5 %, insbesondere 1,2-2,8 %
MgO 0-3 %, insbesondere 0,55-1,5 %
CaO 0-2,5 %, insbesondere 0-0,5 %
BaO 0-3,5 %, insbesondere 0-1,4 %
SrO 0-2 %, insbesondere 0-1,4 %
TiO₂ 1,2-5,5 %, insbesondere 1,8-3,2 %
ZrO₂ 0-3 %, insbesondere 1,0-2,5 %
P₂O₅ 0-8 %, insbesondere 0-0,5 %.

14. Tür für Backofen, Zimmerofen oder Kamin, die mindestens eine Glaskeramikscheibe nach einem der vorhergehenden Ansprüche umfasst.

15. Backofen, Zimmerofen oder Kamin, der mindestens eine Tür oder Scheibe nach dem vorhergehenden Anspruch umfasst.

## Claims

1. A glass-ceramic sheet provided, on at least a portion of at least one of its faces, with a coating of thin layers comprising at least one thin functional layer composed of a metal based on niobium metal Nb, or of an oxide based on a niobium oxide NbOₓ in which x is at most 0.5, the or each thin functional layer being framed by at least two thin layers made of dielectric materials, the physical thickness of the thin functional layer or, if appropriate, the combined physical thickness of all the thin functional layers being within a range extending from 8 to 15 nm.

2. The glass-ceramic sheet as claimed in claim 1, such that the or each thin functional layer is composed of niobium metal.

3. The glass-ceramic sheet as claimed in either of the preceding claims, such that the coating comprises only one thin functional layer.

4. The glass-ceramic sheet as claimed in one of the preceding claims, such that the dielectric materials, which are identical or different, are chosen from oxides, nitrides or oxynitrides of silicon, aluminum, titanium, zirconium, tin, zinc or any one of their mixtures or solid solutions.

5. The glass-ceramic sheet as claimed in the preceding claim, such that the dielectric materials, which are identical or different, are based on silicon nitride, titanium oxide, titanium zirconium oxide, zinc tin oxide, titanium silicon nitride, silicon zirconium nitride or silicon oxide.

6. The glass-ceramic sheet as claimed in one of the preceding claims, such that the physical thickness of each layer of dielectric material is within a range extending from 10 to 100 nm, and in particular from 20 to 80 nm.

7. The glass-ceramic sheet as claimed in one of the preceding claims, such that a thin layer of blocker is located above and in contact with and/or below and in contact with the or each thin functional layer.

8. The glass-ceramic sheet as claimed in the preceding claim, such that the or each thin layer of blocker is made of titanium.

9. The glass-ceramic sheet as claimed in either of claims 7 and 8, such that the physical thickness of the or each thin layer of blocker is at most 3 nm, in particular 2 nm.

10. The glass-ceramic sheet as claimed in one of the preceding claims, exhibiting a light reflection factor of at most 15%, in particular 13%, and a light transmission factor of at least 40%, in particular 50%, within the meaning of the standard EN 410:1998.

11. The glass-ceramic sheet as claimed in one of the preceding claims, exhibiting a reflection of at least 50% for a wavelength of 3 micrometers.

12. The glass-ceramic sheet as claimed in one of the preceding claims, such that the glass-ceramic has a composition of the lithium aluminosilicate type and comprises crystals of β-quartz structure.

13. The glass-ceramic sheet as claimed in the preceding claim, the chemical composition of which comprises the following constituents within the limits defined below, expressed as percentages by weight:
SiO₂ 52-75%, in particular 65-70%
Al₂O₃ 18-27%, in particular 18-19.8%
Li₂O 2.5-5.5%, in particular 2.5-3.8%
K₂O 0-3%, in particular 0-<1%
Na₂O 0-3%, in particular 0-<1%
ZnO 0-3.5%, in particular 1.2-2.8%
MgO 0-3%, in particular 0.55-1.5%
CaO 0-2.5%, in particular 0-0.5%
BaO 0-3.5%, in particular 0-1.4%
SrO 0-2%, in particular 0-1.4%
TiO₂ 1.2-5.5%, in particular 1.8-3.2%
ZrO₂ 0-3%, in particular 1.0-2.5%
P₂O₅ 0-8%, in particular 0-0.5%.

14. An oven, stove or fireplace door or window, comprising at least one glass-ceramic sheet as claimed in one of the preceding claims.

15. An oven, stove or fireplace comprising at least one door or window as claimed in the preceding claim.
